# EUROPEAN PATENT SPECIFICATION

(11) **EP 3 882 286 B1**
(45) Date of publication and mention of the grant of the patent: **11.09.2024**
(21) Application number: 19883978.9
(22) Date of filing: 15.11.2019
(51) Int. Cl.: C08F 290/06, G02B 6/44, C08G 18/10, C08G 18/48, C08G 18/75, C08K 3/36, C08K 5/5425, C08G 18/67, C08K 9/06, C09D 175/16, G02B 6/02

(54) **RESIN COMPOSITION AND OPTICAL FIBER**
HARZZUSAMMENSETZUNG UND GLASFASER
COMPOSITION DE RÉSINE ET FIBRE OPTIQUE

(30) Priority: 16.11.2018 JP 2018215711
(43) Date of publication of application: 22.09.2021
(73) Proprietor: SUMITOMO ELECTRIC INDUSTRIES, LTD., Osaka-shi, Osaka 541-0041 (JP)
(72) Inventor: HAMAKUBO, Katsushi, Osaka-shi, Osaka 541-0041 (JP)
(74) Representative: Hoffmann Eitle
(86) International application number: PCT/JP2019/044951
(87) International publication number: WO 2020/101030

(56) References cited:
- EP-A1- 3 882 286
- EP-A1- 3 882 288
- EP-A1- 3 882 288
- JP-A- 2005 213 453
- JP-A- 2006 137 795
- JP-A- 2007 131 698
- JP-A- H08 134 156
- TW-A- 201 802 194

## Description

### Technical Field

The present disclosure relates to a resin composition and an optical fiber.

This application claims priority based on Japanese Patent Application No. 2018-215711 filed on November 16, 2018.

### Background Art

An optical fiber has generally a coating resin layer for protecting a glass fiber which is an optical transmission medium. The optical fiber has been required to have excellent lateral pressure characteristics in order to reduce an increase in transmission loss induced by micro-bend generated when lateral pressure is applied to the optical fiber.

The coating resin layer includes, for example, a primary resin layer and a secondary resin layer. The primary resin layer is required to have a low Young's modulus and excellent flexibility (for example, refer to Patent Literature 1). It has been investigated to improve the lateral pressure characteristics of the optical fiber by forming a resin layer using an ultraviolet ray curable resin composition containing a filler made of synthetic silica (for example, refer to Patent Literature 2).
Patent Literatures 3 and 4 relate to radiation curable compositions that can be used for various applications, e.g. as covering/ binding material or as an optical medium. Patent Literature 5 is concerned with a photocurable composition suitable as a primary coating material for an optical fiber.

### Citation List

### Patent Literature

[Patent Literature 1] JP 2013-197163 A
[Patent Literature 2] JP 2014-219550 A
[Patent Literature 3] JP 2007-131698 A
[Patent Literature 4] JP 2005-213453 A
[Patent Literature 5] JP H08-134156 A

### Summary of Invention

The resin composition for a primary resin layer of an optical fiber according to the present invention is defined in claim 1.

### Brief Description of Drawings

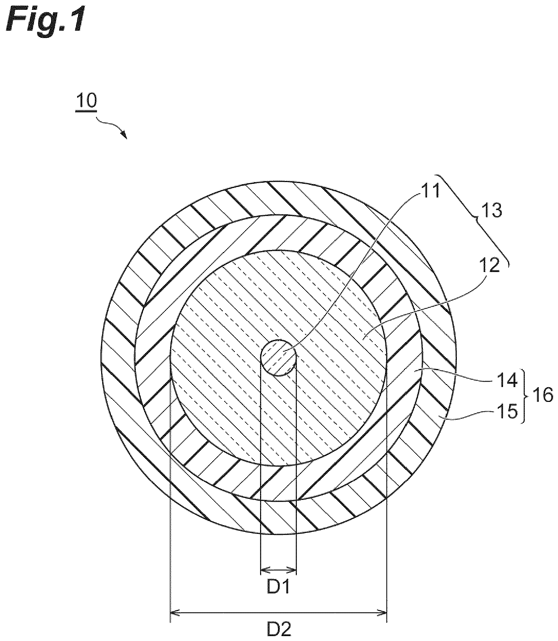

FIG. 1 is a schematic cross-section diagram showing an example of the optical fiber according to the present embodiment.

### Description of Embodiments

### [Problem to be solved by the present disclosure]

It is considered from the viewpoint of improving the void resistance of the optical fiber that the strength of a primary resin layer is enhanced by forming the primary resin layer using a resin composition containing a filler. However, the resin composition used for the primary resin layer typically contains a silane coupling agent, and hence adding the filler tends to easily thicken the resin composition and tends to shorten pot life.

An object of the present disclosure is to provide a resin composition having a long pot life and an optical fiber comprising a primary resin layer formed from the resin composition.

### [Advantageous Effects of the Present Disclosure]

The present disclosure can provide a resin composition having a long pot life for coating an optical fiber capable of forming a resin layer in which the generation of voids is suppressed and which improves the lateral pressure characteristics of an optical fiber, and an optical fiber comprising a primary resin layer formed from the resin composition.

### [Description of Embodiment of the Present Disclosure]

First, the contents of the embodiment of the present disclosure will be described by listing them. The resin composition for a primary resin layer of an optical fiber according to one aspect of the present disclosure includes a base resin containing a urethane (meth)acrylate oligomer, a monomer, a photopolymerization initiator, and a silane coupling agent, and surface-modified inorganic oxide particles having an ultraviolet curable functional group, wherein the ultraviolet curable functional group is a methacryloyl group, and the amount of surface modification on the surface-modified inorganic oxide particles is 0.2 mg/m² or more and 2.8 mg/m² or less.

When the resin composition is prepared, a base resin containing a silane coupling agent and a sol containing unmodified inorganic oxide particles are mixed, and as a result, the silane coupling agent is hydrolyzed and condensation reactions between the silane coupling agents and between the silane coupling agent and hydroxyl groups present on the surface of the inorganic oxide particles occur, and the stability of the resin composition may be impaired. The present inventors assume, on the contrary, that the resin composition of the present embodiment uses specific surface-modified inorganic oxide particles and thereby hydrolysis and condensation reactions are suppressed, allowing the pot life of the resin composition to be kept long.

From the viewpoint of adjusting the Young's modulus of the resin layer formed from the resin composition, the amount of the surface modification on the surface-modified inorganic oxide particles is 0.2 mg/m² and more and 2.8 mg/m² or less.

The above functional group is a methacryloyl group. This makes it easier to form a resin layer having sufficient strength.

From the viewpoint of excellent dispersion property in the resin composition and further improvement in the pot life, the average primary particle size of the inorganic oxide particles may be 650 nm or less.

The primary coating material of the optical fiber according to one aspect of the present disclosure comprises the above resin composition. Using the resin composition according to the present embodiment for the primary resin layer, an optical fiber in which the generation of voids is suppressed and which is excellent in void resistance can be formed.

An optical fiber according to one aspect of the present disclosure comprises a glass fiber comprising a core and cladding, a primary resin layer contacting with the glass fiber and coating the glass fiber, and a secondary resin layer coating the primary resin layer, and the primary resin layer comprises the cured product of the resin composition. Application of the resin composition according to the present embodiment to the primary resin layer can improve the void resistance of the optical fiber.

### [Detail of Embodiment of the Present Disclosure]

Specific examples of a resin composition and an optical fiber according to embodiments of the present disclosure will be described referring to the drawing as necessary. The present invention is not limited to these illustrations but is indicated by the claims. In the following description, the same reference numerals are given to the same elements in the description of the drawing, and redundant explanations are omitted.

### <Resin composition>

The resin composition for a primary resin layer of an optical fiber according to the present embodiment includes a base resin containing a urethane (meth)acrylate oligomer, a monomer, a photopolymerization initiator, and a silane coupling agent, and surface-modified inorganic oxide particles having an ultraviolet curable functional group.

(Meth)acrylate means an acrylate or a methacrylate corresponding to it. The same applies to (meth)acrylic acid.

### (Surface-modified inorganic oxide particles)

For the surface-modified inorganic oxide particles according to the present embodiment, the surface of the inorganic oxide particles is treated with a silane compound having an ultraviolet curable functional group, and the ultraviolet curable functional group is introduced on the surface of the inorganic oxide particles. That is, the surface-modified inorganic oxide particles are composed of an inorganic component and an organic component. The functional group is a methacryloyl group. Having such a functional group makes it easy to form a resin layer having high void resistance.

Examples of the silane compound having an ultraviolet curable functional group include 3-methacryloxypropyltrimethoxysilane, 3-methacryloxypropyltriethoxysilane, and 8-methacryloxyoctyltrimethoxysilane,.

The surface-modified inorganic oxide particles according to the present embodiment are dispersed in a dispersion medium. Using the surface-modified inorganic oxide particles dispersed in the dispersion medium allows for uniform dispersion of the surface-modified inorganic oxide particles in the resin composition and then improvement of the storage stability of the resin composition. The dispersion medium is not particularly limited as long as curing of the resin composition is not obstructed. The dispersion medium may be reactive or non-reactive.

A monomer such as a (meth)acryloyl compound and an epoxy compound can be used as the reactive dispersion medium. Examples of the (meth)acryloyl compound include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, polytetramethylene glycol di(meth)acrylate, 2-hydroxy-3-phenoxypropyl (meth)acrylate, (meth)acrylic acid adduct of propylene glycol diglycidyl ether, (meth)acrylic acid adduct of tripropylene glycol diglycidyl ether, and (meth)acrylic acid adduct of glycerin diglycidyl ether. Compounds exemplified by monomers described above may be used as the (meth)acryloyl compound.

A ketone solvent such as methyl ethyl ketone (MEK), an alcohol solvent such as methanol (MeOH), propylene glycol monomethyl ether (PGME), or an ester solvent such as propylene glycol monomethyl ether acetate (PGMEA) can be used as the non-reactive dispersion medium. In the case of using the non-reactive dispersion medium, the resin composition may be prepared by mixing the base resin and the surface-modified inorganic oxide particles dispersed in the dispersion medium and removing a part of the dispersion medium. When the dispersion medium including surface-modified inorganic oxide particles is observed by an X-ray small angle scattering method and no aggregated particles are observed, it can be said that the surface-modified inorganic oxide particles are dispersed as primary particles.

Due to excellent dispersion properties in the resin composition and easy formation of a tough resin layer, it is preferable that the surface-modified inorganic oxide particles are particles obtained by surface-treating at least one selected from the group consisting of silicon dioxide (silica), zirconium dioxide (zirconia), aluminum oxide (alumina), magnesium oxide (magnesia), titanium oxide (titania), tin oxide, and zinc oxide. From the view point of excellent inexpensiveness, easy surface treatment, permeability to ultraviolet ray, and easy provision of a resin layer with appropriate hardness, it is more preferable that the surface-modified silica particles be used as the surface-modified inorganic oxide particles according to the present embodiment.

From the view point of reducing the Young's modulus of the primary resin layer, the average primary particle size of the surface-modified inorganic oxide particles may be 650 nm or less, preferably 600 nm or less, more preferably 500 nm or less, and still more preferably 400 nm or less. From the view point of provision of the strength of the primary resin layer, the average primary particle size of the surface-modified inorganic oxide particles is preferably 5 nm or more, and more preferably 10 nm or more. The average primary particle diameter can be measured with image analysis of electron microscope pictures, a light scattering method or a BET method, for example. The dispersion medium in which the primary particle of the inorganic oxide particles is dispersed appears to be visually transparent when the diameter of the primary particle is small. When the diameter of the primary particle diameter is relatively large (40 nm or more), the dispersion medium in which the primary particle is dispersed appears to be clouded, but the precipitate is not observed.

The content of the surface-modified inorganic oxide particles is preferably 1% by mass or more and 45% by mass or less, more preferably 2% by mass or more and 40% by mass or less, still more preferably 3% by mass or more and 35% by mass or less, and particularly preferably 5% by mass or more and 30% by mass or less, based on the total amount of the resin composition (total amount of the base resin and surface-modified inorganic oxide particles). The content of the surface-modified inorganic oxide particles is 1% by mass or more, allowing a tough resin layer to be easily formed. The content of the surface-modified inorganic oxide particles is 45% by mass or less, allowing a resin layer with a low Young's modulus to be easily formed. The total amount of the resin composition and the total amount of the cured product of the resin composition may be considered to be the same. The content of the surface-modified inorganic oxide particles is preferably 1% by mass or more and 45% by mass or less, more preferably 2% by mass or more and 40% by mass or less, still more preferably 3% by mass or more and 35% by mass or less, and particularly preferably 5% by mass or more and 30% by mass or less, based on the total amount of the primary resin layer (the total amount of the cured resin composition constituting the primary resin layer).

The amount of surface modification on the surface-modified inorganic oxide particles is 0.2 mg/m² or more and 2.8 mg/m² or less, preferably 0.3 mg/m² or more and 2.6 mg/m² or less, more preferably 0.4 mg/m² or more and 2.4 mg/m² or less, and particularly preferably 0.6 mg/m² or more and 2.2 mg/m² or less. The amount of the surface modification is in the above range, allowing the viscosity of the resin composition to be easily adjusted.

"The amount of the surface modification" in the present description can be calculated from the specific surface area of the surface-modified inorganic oxide particles and the ratio of the organic component. The organic component is a component derived from an ultraviolet curable functional group introduced into the inorganic oxide particles before surface modification. For example, when the surface-modified inorganic oxide particles are composed of silica particles, components other than SiO₂ are organic components. The specific surface area can be measured by a nitrogen adsorption BET method, and the ratio of the organic component can be measured by thermogravimetric/differential thermal analysis (TG/DTA). The amount of surface modification on the surface-modified inorganic oxide particles may be measured by isolating the particles from the dispersion medium before preparing the resin composition, and may be measured by isolating the particles from the resin composition after preparing the resin composition.

### (Base resin)

The base resin according to the present embodiment contains a urethane (meth)acrylate oligomer, a monomer, a photopolymerization initiator, and a silane coupling agent.

As the urethane (meth)acrylate oligomer, an oligomer obtained by reacting a polyol compound, a polyisocyanate compound, and a hydroxyl group-containing (meth)acrylate compound can be used.

Examples of the polyol compound include polytetramethylene glycol, polypropylene glycol and bisphenol A-ethylene oxide addition diol. The number average molecular weight (Mn) of the polyol compound is preferably 1000 or more and 10000 or less, more preferably 1500 or more and 8000 or less, and still more preferably 2000 or more and 6000 or less. Examples of the polyisocyanate compound includes 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol mono(meth)acrylate.

As a catalyst for synthesizing a urethane (meth)acrylate oligomer, an organotin compound is generally used. Examples of the organotin compound include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the view point of easy availability or catalyst performance, it is preferable that dibutyltin dilaurate or dibutyltin diacetate be used as catalyst.

When the urethane (meth)acrylate oligomer is synthesized, lower alcohols having 5 or less carbon atoms may be used. Examples of the lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol.

A silane coupling agent (for example, 3-mercaptopropyltrimethoxysilane) may be added to the terminal of the urethane (meth)acrylate oligomer. The addition of the silane coupling agent may be performed when synthesizing the urethane (meth)acrylate oligomer or when preparing the base resin.

The base resin according to the present embodiment may further contain an epoxy (meth)acrylate oligomer as an oligomer. As an epoxy (meth)acrylate oligomer, an oligomer obtained by reacting a compound having a (meth)acryloyl group with an epoxy resin having two or more glycidyl groups can be used.

A monofunctional monomer having one polymerizable group or a polyfunctional monomer having two or more polymerizable groups can be used as the monomer. The monomer may be used by mixing two or more monomers.

Since a tough resin layer is easily formed, a monomer having a phenoxy group may be used as the monomer.

A (meth)acrylate compound having a phenoxy group can be used as the monomer having a phenoxy group. Examples of the (meth)acrylate compound having a phenoxy group include phenol EO-modified (meth)acrylate, nonylphenol EO-modified (meth)acrylate, phenol PO modified (meth)acrylate, nonylphenol PO modified (meth)acrylate, phenoxyethyl (meth)acrylate, 2-hydroxy-3-phenoxypropyl (meth)acrylate, and 3-phenoxybenzyl (meth)acrylate. EO modification means having an ethylene oxide group represented by (C₂H₄O)ₙ, and PO modification means having a propylene oxide group represented by (C₃H₆O)ₙ. n is an integer of 1 or more.

From the view point of adjusting the Young's modulus of the cured product, the monomer having a phenoxy group may be at least one selected from the group consisting of phenol EO-modified acrylate, nonylphenol EO-modified acrylate, phenoxyethyl acrylate, 2-hydroxy-3-phenoxypropyl acrylate, and 3-phenoxybenzyl acrylate. The monomer having a phenoxy group may be used in combination of two or more.

The content of the monomer having a phenoxy group is preferably 1% by mass or more and 60% by mass or less, more preferably 5% by mass or more and 50% by mass or less, and still more preferably 10% by mass or more and 40% by mass or less, based on the total amount of base resin. The resin composition includes a monomer having a phenoxy group in such a range, allowing a resin layer having an appropriate Young's modulus as a primary coating material for an optical fiber to be formed.

A monomer having no phenoxy group may be used as the monomer. The monomer having no phenoxy group may be a monofunctional monomer or a polyfunctional monomer having two or more polymerizable groups.

Examples of the monofunctional monomer having no phenoxy group include (meth)acrylate monomers such as methyl (meth)acrylate, ethyl (meth)acrylate, propyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 4-tert-butylcyclohexanol (meth)acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, and isobornyl (meth)acrylate; carboxyl group containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocycle containing (meth)acrylates such as N-acryloylmorpholine, N-vinyl pyrrolidone, N-vinyl caprolactam, N-acryloylpiperidine, N-methacryloylpiperidine, N-acryloylpyrrolidine, 3-(3-pyridine) propyl (meth)acrylate, and cyclic trimethylolpropane formal acrylate; maleimide monomers such as maleimide, N-cyclohexyl maleimide, and N-phenyl maleimide; N-substituted amide monomers such as (meth)acrylamide, N, N-dimethyl (meth)acrylamide, N, N-diethyl (meth)acrylamide, N-hexyl (meth)acrylamide, N-methyl (meth)acrylamide, N-isopropyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N, N-dimethylaminoethyl (meth)acrylate, and tert-butylaminoethyl (meth)acrylate; and succinimide monomers such as N-(meth)acryloyloxymethylene succinimide, N-(meth)acryloyl-6-oxyhexamethylene succinimide, and N- (meth)acryloyl-8-oxyoctamethylene succinimide.

Examples of the polyfunctional monomer having no phenoxy group include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyl diol di(meth)acrylate, 3-ethyl-1, 8-octanediol di(meth)acrylate, EO adduct of bisphenol A di(meth)acrylate, trimethylol propane tri(meth)acrylate, trimethylol octane tri(meth)acrylate, trimethylol propane polyethoxy tri(meth)acrylate, trimethylol propane polypropoxy tri(meth)acrylate, trimethylol propane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylol propane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl] isocyanurate.

The photopolymerization initiator can be appropriately selected from known radical photopolymerization initiators and used. Examples of the photopolymerization initiator include 1-hydroxycyclohexyl phenyl ketone (Omnirad 184 manufactured by IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907 manufactured by IGM Resins), 2,4,6-trimethylbenzoyldiphenylphosphine oxide (Omnirad TPO manufactured by IGM Resins), and bis(2,4,6-trimethylbenzoyl) phenylphosphine oxide (Omnirad 819, manufactured by IGM Resins).

The silane coupling agent is not particularly limited as long as it does not disturb curing of the resin composition. Examples of the silane coupling agent include tetramethyl silicate, tetraethyl silicate, mercaptopropyl trimethoxysilane, vinyltrichlorosilane, vinyltriethoxysilane, vinyltris(P-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis-[3-(triethoxysilyl)propyl] disulfide, γ-trimethoxysilylpropyldimethylthiocarbamyl tetrasulfide, and γ-trimethoxysilylpropyl benzothiazyl tetrasulfide. A compound obtained by adding a silane coupling agent to the terminal of a urethane (meth)acrylate oligomer or a (meth)acryl monomer may be used as the silane coupling agent.

The resin composition may further contain a leveling agent, an antifoaming agent, an antioxidant, and the like.

From the view point of suppressing the generation of voids in the optical fiber, the Young's modulus of the cured product of the above resin composition is preferably 4 MPa or less at 23 °C ± 2°C, more preferably 0.05 MPa or more and 4.0 MPa or less, still more preferably 0.1 MPa or more and 3.5 MPa or less, and particularly preferably 0.3 MPa or more and 3.0 MPa or less.

The resin composition according to the present embodiment can be suitably used as a primary coating material for an optical fiber. Using the resin composition according to the present embodiment for a primary resin layer can suppress the generation of voids while reducing a Young's modulus and produce an optical fiber being excellent in void resistance and lateral pressure characteristics.

### <Optical fiber>

FIG. 1 is a schematic cross-section diagram showing an example of the optical fiber according to the present embodiment. The optical fiber 10 comprises the glass fiber 13 including the core 11 and the cladding 12, and the coating resin layer 16 including the primary resin layer 14 provided on the outer periphery of the glass fiber 13 and the secondary resin layer 15.

The cladding 12 surrounds the core 11. The core 11 and the cladding 12 mainly include glass such as silica glass, germanium-added silica glass can be used, for example, in the core 11, and pure silica glass or fluorine-added silica glass can be used in the cladding 12.

In FIG. 1, for example, the outside diameter (D2) of the glass fiber 13 is about 125 µm, and the diameter (D1) of the core 11 constituting the glass fiber 13 is about 7 to 15 µm.

The thickness of the coating resin layer 16 is typically about 60 to 70 µm. The thickness of each of the primary resin layer 14 and the secondary resin layer 15 may be about 10 to 50 µm, and for example, the thickness of the primary resin layer 14 may be 35 µm and the thickness of the secondary resin layer 15 may be 25 µm. The outside diameter of the optical fiber 10 may be about 245 to 265 µm.

The thickness of the coating resin layer 16 may be about 27 to 48 µm. Each layer thickness of the primary resin layer 14 and the secondary resin layer 15 may be about 10 to 38 µm, and for example, the thickness of the primary resin layer 14 may be 25 µm and the thickness of the secondary resin layer 15 may be 10 µm. The outside diameter of the optical fiber 10 may be about 179 to 221 µm.

Furthermore, the outside diameter (D2) of the glass fiber 13 may be about 100 µm, and the thickness of the coating resin layer 16 may be about 22 to 37 µm. Each layer thickness of the primary resin layer 14 and the secondary resin layer 15 may be about 5 to 32 µm, and for example, the thickness of the primary resin layer 14 may be 25 µm and the thickness of the secondary resin layer 15 may be 10 µm. The outside diameter of the optical fiber 10 may be about 144 to 174 µm.

The Young's modulus of the secondary resin layer is preferably 1300 MPa or more at 23°C, more preferably 1300 MPa or more and 2600 MPa or less, and further preferably 1300 MPa or more and 2500 MPa or less. The Young's modulus of the secondary resin layer of 1300 MPa or more is easy to improve the lateral pressure characteristics, and the Young's modulus of 2600 MPa or less is hard to cause a crack or the like in the secondary resin layer due to provision of appropriate toughness with the secondary resin layer.

The secondary layer can be formed by curing a resin composition including a urethane (meth)acrylate oligomer, a monomer, and a photopolymerization initiator. Prior art techniques can be used for a resin composition for the secondary resin layer. A urethane (meth)acrylate oligomer, a monomer and a photopolymerization initiator may be appropriately selected from compounds exemplified in the above base resin. In addition, the resin composition for the secondary resin layer may include hydrophobic inorganic oxide particles. The hydrophobic inorganic oxide particles may be the surface-modified inorganic oxide particles described above. The resin composition constituting the secondary resin layer has composition different from the resin composition forming the primary resin layer. From the view point of increasing the Young's modulus of the secondary resin layer, the Mn of the polyol compound used in synthesizing the urethane (meth)acrylate oligomer may be 400 or more and 2000 or less.

### Examples

Hereinafter, the results of evaluation test using Examples and Comparative Examples according to the present disclosure will be shown, and the present disclosure is described in more detail. The present invention is not limited to these examples.

### [Preparation of resin composition]

### (Oligomer)

As the oligomer, a urethane acrylate oligomer obtained by reacting polypropylene glycol having a molecular weight of 4000, isophorone diisocyanate, hydroxyethyl acrylate, and methanol was prepared.

### (Monomer)

As the monomer, nonylphenol EO-modified acrylate (trade name "Aronix M-113" of Toagosei Co., Ltd., n≈4), N-vinylcaprolactam and 1,6-hexanediol diacrylate were prepared.

### (Photopolymerization initiator)

As the photopolymerization initiator, 2,4,6-trimethylbenzoyldiphenylphosphine oxide was prepared.

### (Silane coupling agent)

As the silane coupling agent, 3-mercaptopropyltrimethoxysilane was prepared.

### (Base resin)

60 parts by mass of a urethane acrylate oligomer, 22.8 parts by mass of a nonylphenol EO-modified acrylate, 4.8 parts by mass of N-vinylcaprolactam, 1.6 parts by mass of 1,6-hexanediol diacrylate, 2.7 parts by mass of 2,4,6-trimethylbenzoyldiphenylphosphine oxide, and 0.8 parts by mass of 3-mercaptopropyltrimethoxysilane were mixed to prepare a base resin.

### (Surface-modified inorganic oxide particles)

As the surface-modified inorganic oxide particles, a silica sol (MEK dispersion) including silica particles surface-treated with 3-methacryloxypropyltrimethoxysilane (hereinafter, simply referred to as "silica particles") was prepared.

### (Unmodified silica particles)

A silica sol (MEK dispersion) including unmodified silica particles was prepared.

### (Examples 1 to 9 and Comparative Examples 1 and 2)

After mixing a base resin and a silica sol, the majority of MEK was removed to prepare a resin composition so that the content of the silica particles in the resin composition was 10% by mass.

The following evaluation was performed by using the resin compositions obtained in Examples and Comparative Examples. The results are shown in Table 1.

### (Measurement of amount of surface modification)

Chloroform was added to a resin composition and centrifugation was performed to collect a precipitate. Acetone was added to the precipitate and centrifugation was performed to remove a supernatant, and then the operation of adding acetone to the precipitate again, centrifuging, and removing the supernatant was performed four times, and silica particles were taken out. The silica particles ground in a mortar were dried under reduced pressure at room temperature for 12 hours to remove volatile components. Centrifugation was performed in the condition of 30000 rpm for 120 minutes. The dried silica particles were subjected to a reduced pressure treatment at 80°C for 12 hours, and the specific surface area (m²/g) of the silica particles was measured by a nitrogen adsorption BET method using a pore distribution measuring device ("ASAP-2020" manufactured by Micromeritics).

The ratio (% by mass) of an organic component included in the silica particles was measured by using a simultaneous differential thermogravimetric analyzer ("TG/DTA6300" manufactured by Hitachi High-Tech Science Corporation). Measurement was performed by heating the weighed silica particles from room temperature to 850°C under nitrogen (300 mL/min), then cooling from 850°C to 200°C, and heating from 200°C to 1000°C under air (100 mL/min) to measure the weight change. The ratio of the organic component was calculated from the weight change of the silica particles.

The amount of surface modification of the silica particles was calculated from the specific surface area of the silica particles and the ratio of the organic component by the following formula: Amount of surface modification (mg/m2) = Ratio of organic component/Specific surface area.

### (Young's modulus)

Each of the resin composition was applied onto a polyethylene terephthalate (PET) film by using a spin coater, and then cured using an electrodeless UV lamp system (D bulb) (manufactured by Heraeus) at a condition of 1000 ± 100 mJ/cm² to form a resin layer having a thickness of 200 ± 20 µm on the PET film. The resin layer was peeled off from the PET film to obtain a resin film.

A resin film was punched into a dumbbell shape of JIS K 7127 type 5 and pulled under a condition of 23 ± 2°C and 50 ± 10% RH using a tensile tester at a tension speed of 1 mm/min and a gauge length of 25 mm, and a stress-strain curve was obtained. Young's modulus was determined by the tangent.

### (Pot life)

A resin composition was placed in a container and stored at 60°C to investigate the time at which the resin composition was thickened and thus failed to be applied.

**[Table 1]**

| | Average primary particle size (nm) | Amount of surface modification (mg/m²) | Ratio of organic component (% by mass) | Content of silica particles (% by mass) | Young's modulus (MPa) | Time at which thickening starts |
|---|---|---|---|---|---|---|
| Example 1 | 10-15 | 0.55 | 9 | 10 | 0.66 | After 3 months |
| Example 2 | 10-15 | 0.89 | 15 | 10 | 0.9 | After 6 months |
| Example 3 | 10-15 | 1.19 | 20 | 10 | 1.05 | After 6 months |
| Example 4 | 30-60 | 1.70 | 16 | 10 | 1.5 | After 6 months |
| Example 5 | 30-60 | 2.55 | 24 | 10 | 2.4 | After 6 months |
| Example 6 | 30-60 | 2.77 | 26 | 10 | 3.6 | After 6 months |
| Example 7 | 70-100 | 0.67 | 2 | 10 | 0.6 | After 6 months |
| Example 8 | 250-350 | 0.67 | 1 | 10 | 0.6 | After 6 months |
| Example 9 | 450-640 | 0.60 | 0.3 | 10 | 0.6 | After 6 months |
| Comparativ e Example 1 | 10-15 | 0.17 | 3 | 10 | - | - |
| Comparativ e Example 2 | 10-15 | - | - | 10 | - | - |

It was confirmed that the resin compositions in Examples had a long pot life and could form a resin layer having a Young's modulus required for the primary resin layer. On the other hand, the resin composition in Comparative Example 1 failed to be evaluated due to significantly high initial viscosity. In Comparative Example 2, when the resin composition was prepared, unmodified silica particles aggregated, and thus evaluation was failed.

### Reference Signs List

10: Optical fiber, 11: Core, 12: Cladding, 13: Glass fiber, 14: Primary resin layer, 15: Secondary resin layer, 16: Coating resin layer.

## Claims

1. A resin composition for a primary resin layer (14) of an optical fiber (10), the optical fiber (10) comprising a glass fiber (13) comprising a core (11) and cladding (12), and the primary resin layer (14) contacting with the glass fiber (13) and coating the glass fiber (13), the resin composition comprising:
a base resin containing a urethane (meth)acrylate oligomer, a monomer, a photopolymerization initiator, and a silane coupling agent; and
surface-modified inorganic oxide particles having an ultraviolet curable functional group, which are inorganic oxide particles, into the surface of which an ultraviolet curable functional group is introduced by treating the surface of the inorganic oxide particles with a silane compound having an ultraviolet curable functional group, so that the surface-modified inorganic oxide particles are composed of an organic component derived from the ultraviolet curable functional group and an inorganic component,
wherein
the ultraviolet curable functional group is a methacryloyl group, and
an amount of surface modification on the surface-modified inorganic oxide particles is 0.2 mg/m² or more and 2.8 mg/m² or less, wherein the amount of surface modification is calculated from the specific surface area of the surface-modified inorganic oxide particles and the ratio of the organic component, and is defined as follows: amount of surface modification (mg/m2) = ratio of the organic component (% by mass)/specific surface area (m2/g) of the surface-modified inorganic oxide particles, wherein the ratio of the organic component, in % by mass of the organic component included in the surface-modified inorganic oxide particles, is determined by thermogravimetric/differential thermal analysis (TG/DTA) based on the weight change of the inorganic particles, and the specific surface area of the surface-modified inorganic oxide particles is measured by a nitrogen absorption BET method.

2. The resin composition according to claim 1, wherein an average primary particle diameter of the non-aggregated surface-modified inorganic oxide particles is 650 nm or less.

3. The resin composition according to claim 1 or claim 2, wherein a content of the surface-modified inorganic oxide particles is 1% by mass or more and 45% by mass or less based on a total amount of the resin composition.

4. A primary coating material for an optical fiber (10), comprising the resin composition according to any one of claim 1 to claim 3.

5. An optical fiber (10) comprising:
a glass fiber (13) comprising a core (11) and cladding (12);
a primary resin layer (14) contacting with the glass fiber (13) and coating the glass fiber (13); and
a secondary resin layer (15) coating the primary resin layer (14),
wherein the primary resin layer (14) comprises a cured product of the resin composition according to any one of claim 1 to claim 3.

## Patentansprüche

1. Harzzusammensetzung für eine Primärharzschicht (14) einer optischen Faser (10), wobei die optische Faser (10) eine Glasfaser (13) umfasst, die einen Kern (11) und Mantel (12), sowie die Primärharzschicht (14), die in Kontakt mit der Glasfaser (13) steht und die Glasfaser (13) beschichtet, umfasst, wobei die Harzzusammensetzung folgendes umfasst:
ein Basisharz, das ein Urethan(meth)acrylat-Oligomer, ein Monomer, einen Fotopolymerisationsstarter und ein Silankupplungsmittel enthält; und
oberflächenmodifizierte anorganische Oxidpartikel mit einer Ultraviolett-härtbaren funktionellen Gruppe, die anorganische Oxidpartikel sind, in deren Oberfläche eine Ultraviolett-härtbare funktionelle Gruppe eingeführt ist, indem die Oberfläche der anorganischen Oxidpartikel mit einer Silanverbindung mit einer Ultraviolett-härtbaren funktionellen Gruppe behandelt wird, so dass die oberflächenmodifizierten anorganischen Oxidpartikel aus einer organischen Komponente, die sich von der Ultraviolett-härtbaren funktionellen Gruppe ableitet, und einer anorganischen Komponente zusammengesetzt sind, wobei
die Ultraviolett-härtbare funktionelle Gruppe eine Methacryloyl-Gruppe ist und
das Maß der Oberflächenmodifizierung auf den oberflächenmodifizierten anorganischen Oxidpartikeln 0,2 mg/m² oder mehr und 2,8 mg/m² oder weniger ist, wobei das Maß der Oberflächenmodifikation berechnet wird aus der spezifischen Oberfläche der oberflächenmodifizierten anorganischen Oxidpartikel und dem Anteil der organischen Komponente und wie folgt definiert ist:
Maß der Oberflächenmodifizierung (mg/m²) = Anteil der organischen Komponente (Masse-%)/spezifische Oberfläche (m²/g) der oberflächenmodifizierten anorganischen Oxidpartikel,
wobei der Anteil der organischen Komponente in Masse-% der organischen Komponente, die in die oberflächenmodifizierten anorganischen Oxidpartikel eingeschlossen ist, mittels Thermogravimetrie, Differenzthermoanalyse (TG/DTA) auf Basis der Gewichtsänderung der anorganischen Partikel bestimmt wird und die spezifische Oberfläche der oberflächenmodifizierten anorganischen Oxidpartikel mit einer Stickstoffabsorptions-BET-Methode gemessen wird.

2. Harzzusammensetzung gemäß Anspruch 1, in der ein mittlerer Primärpartikeldurchmesser der nichtaggregierten oberflächenmodifizierten anorganischen Oxidpartikel 650 nm oder weniger ist.

3. Harzzusammensetzung gemäß Anspruch 1 oder 2, in der ein Gehalt der oberflächenmodifizierten anorganischen Oxidpartikel 1 Masse-% oder mehr und 45 Masse-% oder weniger, bezogen auf eine Gesamtmenge der Harzzusammensetzung, ist.

4. Primärbeschichtungsmaterial für eine optische Faser (10), die die Harzzusammensetzung gemäß mindestens einem der Ansprüche 1 bis 3 umfasst.

5. Optische Faser (10), die folgendes umfasst:
eine Glasfaser (13), die einen Kern (11) und Mantel (12) umfasst;
eine Primärharzschicht (14), die in Kontakt mit der Glasfaser (13) steht und die Glasfaser (13) beschichtet; und
eine Sekundärharzschicht (15), die die Primärharzschicht (14) beschichtet,
wobei die Primärharzschicht (14) ein gehärtetes Produkt der Harzzusammensetzung gemäß mindestens einem der Ansprüche 1 bis 3 umfasst.

## Revendications

1. Composition de résine pour une couche de résine primaire (14) d'une fibre optique (10), la fibre optique (10) comprenant une fibre de verre (13) comprenant un coeur (11) et une gaine (12), et la couche de résine primaire (14) entrant en contact avec la fibre de verre (13) et recouvrant la fibre de verre (13), la composition de résine comprenant :
une résine de base contenant un oligomère (méth)acrylate d'uréthane, un monomère, un initiateur de photopolymérisation, et un agent de couplage silane ; et
des particules d'oxyde inorganique à surface modifiée et présentant un groupe fonctionnel durcissable aux ultraviolets, qui sont des particules d'oxyde inorganique, dans la surface desquelles un groupe fonctionnel durcissable aux ultraviolets est introduit en traitant la surface des particules d'oxyde inorganique avec un composé de silane présentant un groupe fonctionnel durcissable aux ultraviolets, de sorte que les particules d'oxyde inorganique à surface modifiée sont composées d'un composant organique dérivé du groupe fonctionnel durcissable aux ultraviolets et d'un composant inorganique, dans laquelle
le groupe fonctionnel durcissable aux ultraviolets est un groupe méthacryloyle, et
une quantité de modification de surface sur les particules d'oxyde inorganique à surface modifiée est de 0,2 mg/m² ou plus et de 2,8 mg/m² ou moins, dans laquelle la quantité de modification de la surface est calculée à partir de la surface spécifique des particules d'oxyde inorganique à surface modifiée et du rapport du composant organique, et est définie comme suit :
quantité de modification de la surface (mg/m²) = rapport du composant organique (% en masse)/surface spécifique (m²/g) des particules d'oxyde inorganique à surface modifiée, dans laquelle le rapport du composant organique, en % en masse du composant organique inclus dans les particules d'oxyde inorganique à surface modifiée, est déterminé par analyse thermogravimétrique/thermique différentielle (TG/DTA) sur la base de la variation de poids des particules inorganiques, et la surface spécifique des particules d'oxyde inorganique à surface modifiée est mesurée par une méthode BET d'absorption de l'azote.

2. Composition de résine selon la revendication 1, dans laquelle le diamètre primaire moyen des particules d'oxyde inorganique non agrégées et à surface modifiée est de à 650 nm ou moins.

3. Composition de résine selon la revendication 1 ou la revendication 2, dans laquelle une teneur en particules d'oxyde inorganique à surface modifiée est de 1 % en masse ou plus et de 45 % en masse ou moins par rapport à la quantité totale de la composition de résine.

4. Matériau de revêtement primaire pour une fibre optique (10), comprenant la composition de résine selon l'une quelconque des revendications 1 à 3.

5. Fibre optique (10) comprenant :
une fibre de verre (13) comprenant un coeur (11) et une gaine (12) ;
une couche de résine primaire (14) en contact avec la fibre de verre (13) et recouvrant la fibre de verre (13) ; et
une couche de résine secondaire (15) recouvrant la couche de résine primaire (14),
dans laquelle la couche de résine primaire (14) comprend un produit durci de la composition de résine selon l'une quelconque des revendications 1 à 3.
